Europäisches Patentamt

European Patent Office

Office européen des brevets

(11) Publication number: **0 344 278 B1**

# EUROPEAN PATENT SPECIFICATION

(45) Date of publication of patent specification: **23.03.94** (51) Int. Cl.⁵: **G11B 5/127**, G11B 5/31

(21) Application number: **89900558.1**

(22) Date of filing: **05.12.88**

(86) International application number:
**PCT/US88/04313**

(87) International publication number:
**WO 89/05505 (15.06.89 89/13)**

(54) LAMINATED POLES FOR RECORDING HEADS.

(30) Priority: **04.12.87 US 128866**

(43) Date of publication of application:
**06.12.89 Bulletin 89/49**

(45) Publication of the grant of the patent:
**23.03.94 Bulletin 94/12**

(84) Designated Contracting States:
**DE NL**

(56) References cited:
**EP-A- 0 046 697**
**US-A- 3 867 368**

**PATENT ABSTRACTS OF JAPAN, vol. 7, no.
117 (P-198)(1262), 21 May 1983;& JP-A-
5835719**

**PATENT ABSTRACTS OF JAPAN, vol. 8, no.
129 (P-280)(1566), 15 June 1984; & JP-A-
5933613**

(73) Proprietor: **DIGITAL EOUIPMENT CORPORA-
TION**
**111 Powdermill Road**
**Maynard Massachusetts 01754-1418(US)**

(72) Inventor: **MALLORY, Michael, L.**
**113 Boylston Road**
**Berlin, MA 01503(US)**

(74) Representative: **Goodman, Christopher**
**Eric Potter & Clarkson**
**St. Mary's Court**
**St. Mary's Gate**
**Nottingham NG1 1LE (GB)**

PATENT ABSTRACTS OF JAPAN, vol. 9, no. 304 (P-409)(2027), 30 November 1985; & JP-A-60136007

PATENT ABSTRACTS OF JAPAN, vol. 10, no. 140 (P-458)(2197), 23 May 1986; & JP-A-60258712

PATENT ABSTRACTS OF JAPAN, vol. 11, no. 243 (P-603)(2690), 8 August 1987; & JP-A-6252710

JOURNAL OF APPLIED PHYSICS, vol 36, no. 3, part 2, March 1965, pages 1123-1125, J.M.DAUGHTON and H.CHANG: "Wall Motion Reversal in Easy-Axis-Coupled Film Strips"

IEEE TRANSACTIONS ON MAGNETICS, vol. MAG-9, no. 3, September 1973, pages 563-567, M.OKON and H.HOFFMANN: "Magnetostatic Coupling Between Ferromagnetic Sandwich Films with Nonmagnetic Intermediate Layer"

IEEE TRANSACTIONS ON MAGNETICS, vol. MAG-7, no. 1, March 1971, pages 146-150, J. LAZZARI and I. MELNICK: "Integrated Magnetic Recording Heads"

## Description

### Background of the Invention

This invention relates to poles for thin film recording heads.

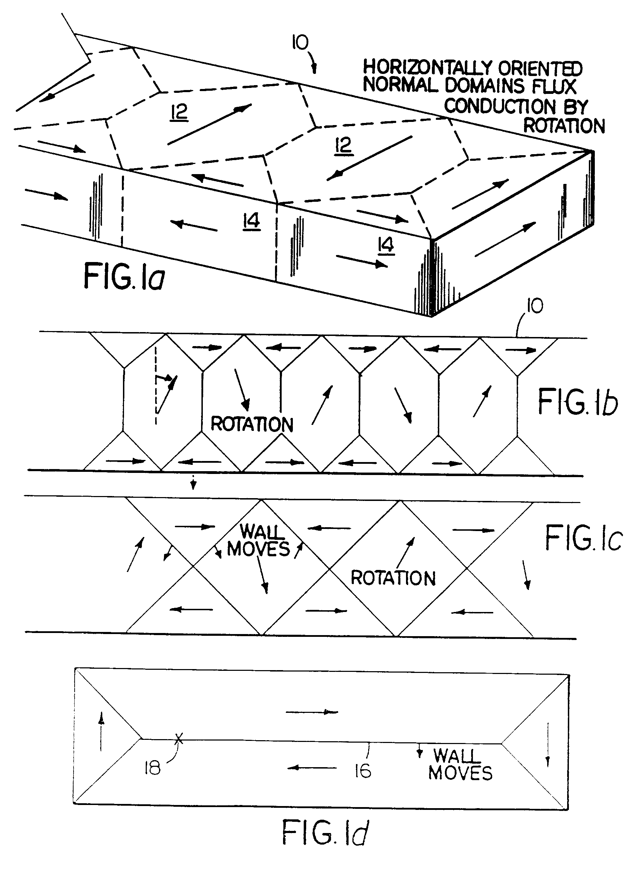

As the track density is increased in magnetic recording, it is necessary to reduce the track width and the width of the head. Reducing the width of the head results in "edge closure domains" in single layer poles when the pole width is reduced to a critical value where the edge domains dominate. These edge domains can conduct flux only by domain wall motion. This process fails at high frequencies and leads to "Barkhausen noise" at low frequencies. This situation is illustrated in Figs. 1a-1d. In Fig. 1a a pole 10 includes horizontally oriented normal domains 12 and edge domains 14. As shown in Fig.l 1b, flux is conducted by rotation. As the pole width is reduced to a critical value, the edge domains touch as shown in Fig. 1c. The magnetic permeability becomes low at high frequencies and flux is conducted by wall motion. As shown in Fig. 1d, Barkhausen noise is created when a wall 16 encounters a defect 18 and becomes temporarily stuck.

In addition to the single layer poles illustrated in Figs. 1a-1d, laminated ferromagnetic structures are known. Those structures related to narrow track applications usually involve relatively thick insulators (e.g. 20nm (200 Angstroms)) alternating with a large number of thin (70nm (700 Angstroms)) ferromagnetic films. A structure including two ferromagnetic layers separated by a very thin (less than 10nm (100 Angstroms)) layer of nonmagnetic material is disclosed in "Coercivity, Structure, and Stoichiometry of Permalloy/Alumina Multilayers" by N.J. Jubb et al. presented at the 1984 M.M.M. Conference, and "Sensitivity of Single Sided Single Pole Type Perpendicular Magnetic Head" by Iaso Watanabe et al. in Research Inst. of Ele. Eng., Tohoko University. The Watanabe paper discusses narrow tracks for high frequency operation. In "Reproducing Sensitivity of Single-Pole-Type Head with Co-Zr-Nb/SiO$_2$ Multilayered Films" by S. Iwasaki, Y. Nakamura, I Watanabe, K. Wamakawa, H. Hasegawa, IEEE Translation Journal on Magnetics In Japan, Vol. TJMJ-2 No.5, May 1987, p.386, heads are disclosed including ferromagnetic layers separated by a nonmagnetic layer. The ferromagnetic layers were of the same material and had equivalent uniaxial anisotropy.

In US-3867368 there is described a pole comprising a first layer of magnetically soft material adjacent to an air gap, and a second layer of magnetically hard material with an intervening layer of a structure ensuring decoupling of the magnetizations of the soft and hard layers.

In JP-6252710 there is described a pole comprising a first and second magnetic layer having a direct connection at the edge of the width of the pole, and separated by a non-magnetic layer otherwise.

In Journal of Applied Physics, Vol 36, No. 3 (part 2); March 1965, pp1123-1125: J M Daughton and H Chang "Wall Motion Reversal in Easy-Axis-Coupled Film Strips", there is described a thin film structure for coupling two oppositely magnetised layers using a particular selection of the coercivities of the layers.

### Summary of the Invention

The pole according to one aspect of the invention as defined in appended claim 1 includes at least two ferromagnetic layers having different uniaxial anisotropies and a nonmagnetic layer disposed between the ferromagnetic layers. In one embodiment, the nonmagnetic layer completely separates the ferromagnetic layers. In another embodiment, the nonmagnetic layer partially separates the ferromagnetic layers. It is preferred that the nonmagnetic layer be an electrical insulator for the first embodiment.

When the nonmagnetic layer completely separates the two ferromagnetic layers, the thickness of the nonmagnetic layer G satisfies the inequality

$$G < 2Hk(W-T)/Ms$$

where G is the nonmagnetic layer thickness;
W is the width of the structure (track width);
T is the thickness of each ferromagnetic layer;
Hk is the average uniaxial anisotropy field of the ferromagnetic layers; and
Ms is the saturation magnetization of the ferromagnetic layers. It is preferred that the ferromagnetic layers include differing compositions of NiFeCo and that the nonmagnetic layer be of Al$_2$O$_3$ or any other electrical insulator.

In another aspect of the invention the pole includes a thick unlaminated layer of a ferromagnetic material separated from a laminated seed layer.

### Brief Description of the Drawing

Figs. 1a-1d are schematic illustrations of single layer poles;
Fig. 2 is a perspective view of a laminated pole including two ferromagnetic layers separated by a nonmagnetic layer;
Fig. 3 is a perspective view of a pole having multiple laminations;

Fig. 4 is a perspective view of a pole including a nonmagnetic layer which partially separates the ferromagnetic layers;

Figs. 5a-5c are schematic illustrations showing the process for making the pole of Fig. 4; and

Fig. 6 is a perspective view of a thick pole disposed on a laminated seed layer.

Description of the Preferred Embodiments

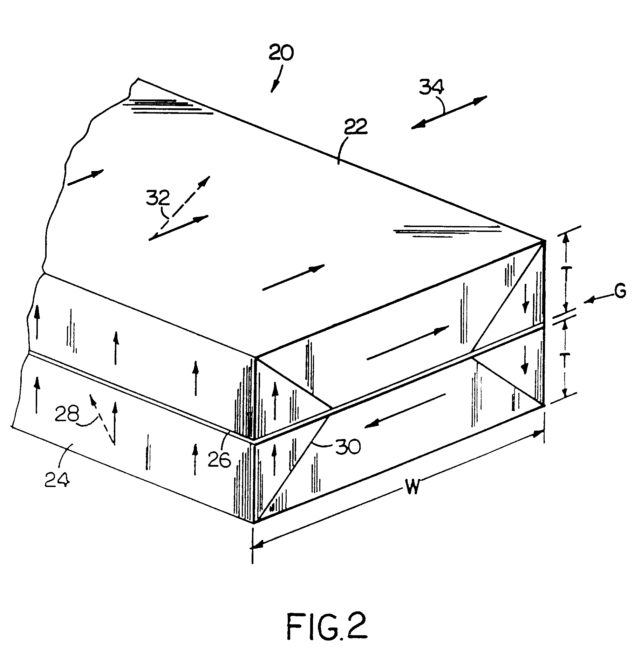

The theory on which the present invention is based will now be discussed in conjunction with Fig. 2. A laminated pole structure 20 includes a first ferromagnetic layer 22 and a second ferromagnetic layer 24 separated by a thin nonmagnetic layer 26. The nonmagnetic layer 26 inhibits "exchange coupling" between the ferromagnetic layers 22 and 24. This allows flux circulation between the two layers to eliminate edge domains. The nonmagnetic layer 26 is thick enough to stop the exchange coupling top to bottom, but thin enough to conduct flux without requiring too much magnetostatic energy. In the structure of Fig. 2, edge domains such as illustrated by an arrow 28 can rotate to conduct flux while a domain wall 30 never moves. Central domains can also rotate as shown by an arrow 32. The ferromagnetic layers 22 and 24 have an induced uniaxial anisotropy whose easy axis is shown by an arrow 34. The anisotropy is induced by an external magnetic field during the deposition process which creates the layers 22 and 24. Flux is conducted by rotation which can occur at high frequencies and does not generate any magnetic noise. If the nonmagnetic layer 26 is also an electrical insulator, there is the added advantage of suppression of eddy currents.

The applicant herein has derived an approximate inequality for estimating the acceptable thickness of the nonmagnetic layer 26. The inequality is

$$G < 2Hk(W-T)/Ms$$

where the symbols have been defined above. By observing this relationship, good domain structures are obtained which can conduct flux in narrow (high track density) poles. A typical thickness for the nonmagnetic layer is 50 Angstroms. This relationship neglects wall energy and assumes the domain pattern shown in Fig. 2. For very thin laminates (T<0.5 microns) the actual pattern will distribute the closure flux more widely over the gap so that the above equation will underestimate the acceptable thickness G.

The magnetic layers 22 and 24 of Fig. 2 may be made either by sputtering or plating. Sputtering is used for the nonmagnetic layer 26 when it is an electrical insulator. Generally, an electrically conductive material will not adequately stop exchange coupling between the magnetic layers for acceptable values of G. After the layers are deposited, the structure is ion milled to desired dimensions. Suitable materials for the ferromagnetic layers 22 and 24 are NiFeCo with varying amounts of Co in the two layers to generate the different uniaxial anisotropy levels. Thus, the uniaxial anisotropy of one of the magnetic layers is made much stronger than that of the other layer by varying the composition of the material. One layer will thus dominate the system locally and the other layer will automatically fall into a keepering orientation. This master-slave relationship avoids disordered domain structures resulting from the two layers relaxing into the same orientation (parallel instead of the desired antiparallel configuration) after saturation. Suitable materials for the nonmagnetic layers are $Al_2O_3$ and $SiO_2$.

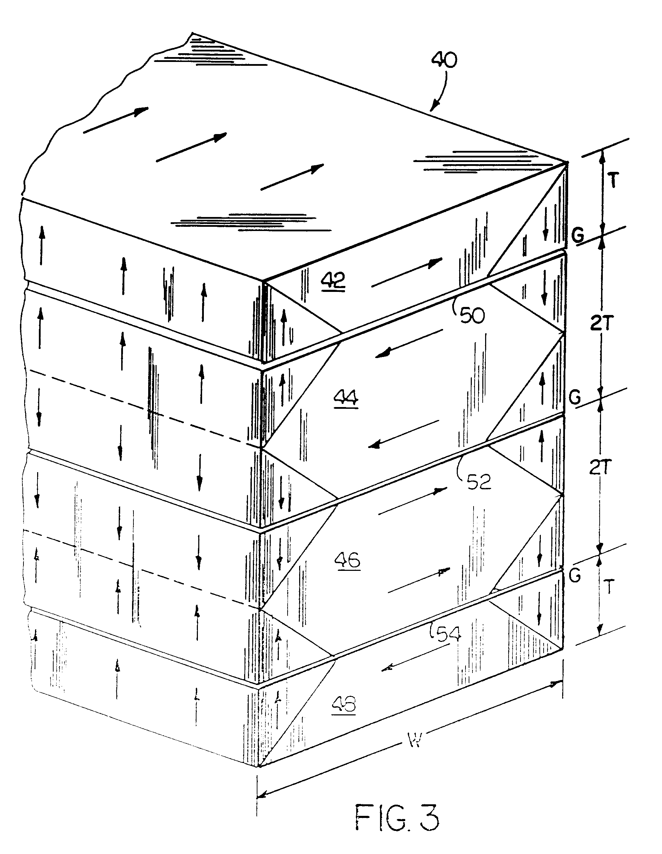

Yet another embodiment of the invention is shown in Fig. 3. A pole structure 40 includes multiple layers 42, 44, 46, and 48 of a ferromagnetic material separated by layers 50, 52, and 54 of a nonmagnetic material. The thickness of the nonmagnetic layers 50, 52, and 54 satisfies the equation discussed above in conjunction with Fig. 2 with T equal to the thickness of the top and bottom magnetic layers 42 and 48. The interior ferromagnetic layers 44 and 46 have a thickness of 2T. As in the embodiment of Fig. 2, the pole 40 conducts magnetic flux by rotation; the domain walls never move. The pole 40 is fabricated using the same fabrication procedure as utilized to create the bilayer structure of Fig. 2. The number of layers shown in Fig. 3 is entirely exemplary and it should be understood that more or fewer layers may be employed.

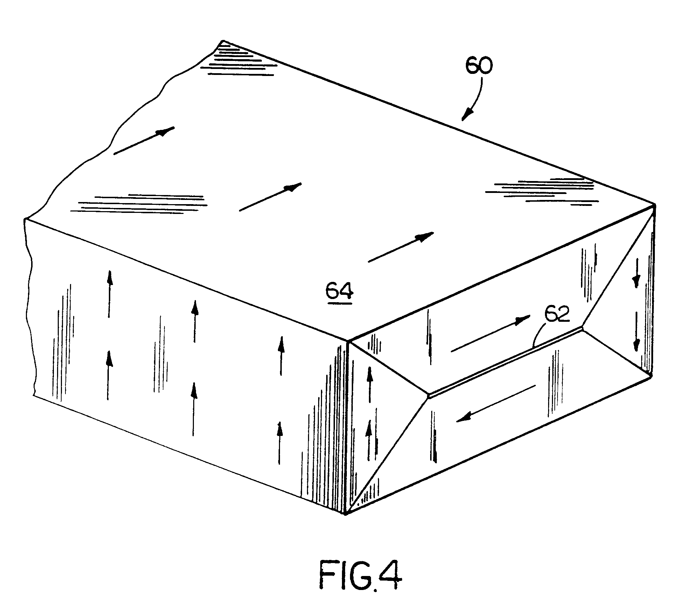

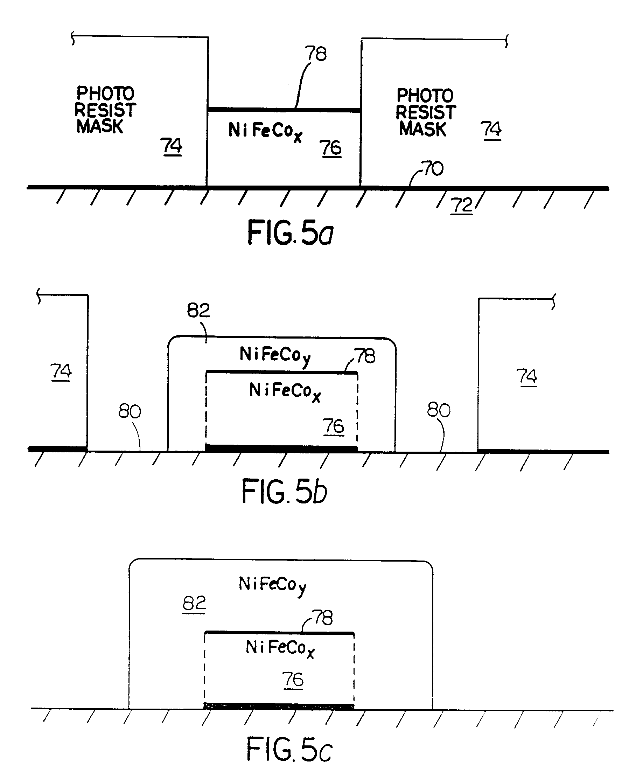

Fig. 4 is an important embodiment of the present invention. A pole 60 includes a nonmagnetic layer 62 which is completely surrounded by a ferromagnetic material 64. As will be shown below in conjunction with Fig.5, the material 64 may in fact be a composite of different materials having different uniaxial anisotropies. The thickness of the nonmagnetic layer 62 is not constrained by the inequality discussed in conjunction with Fig.2 since there is no nonmagnetic material in locations where the flux closes between the two layers. The configuration of the pole 60, however, will not inhibit eddy currents as in the earlier embodiments. To produce the pole 60 by ion milling, it is necessary to pattern the nonmagnetic layer 62 before a second magnetic layer is deposited. A through mask plating approach is available, however, which can produce a suitable structure with process efficiency. This process will now be described in conjunction with Fig.5.

With reference first to Fig.5a, a 200nm (2000 Angstroms) thick NiFeCo plating base 70 resides on a ceramic base 72. A photoresist mask 74, appropriately patterned, is deposited on the plating base layer 70. A first ferromagnetic layer 76 of $NiFeCo_x$ is plated through the mask. A nonmagnetic layer 78 is plated through the same mask with extra thickness to allow for seed layer etching. A suitable material for the layer 78 is NiP having an initial thickness of 250 nm (2500 Angstroms). Next, the edge zones of the mask 74 are removed and the nonmagnetic layer 78 is sputter etched to have a thickness of approximately 50 nm (500 Angstroms). This sputter etching will also remove the seed layer in the regions indicated at 80. Additional magnetic material is then plated to create a layer 82 of $NiFeCo_y$ which may have a different cobalt content from the layer 76. The completed pole is shown in Fig.5c. The plating of the magnetic layer 82 is completed and the mask 74 is removed. The seed layer 70 of Fig.5a is also removed by sputter etching to leave the completed pole. It should be noted that the magnetic layers 76 and 82 are plated in the presence of a bias magnetic field for inducing the uniaxial anisotropy.

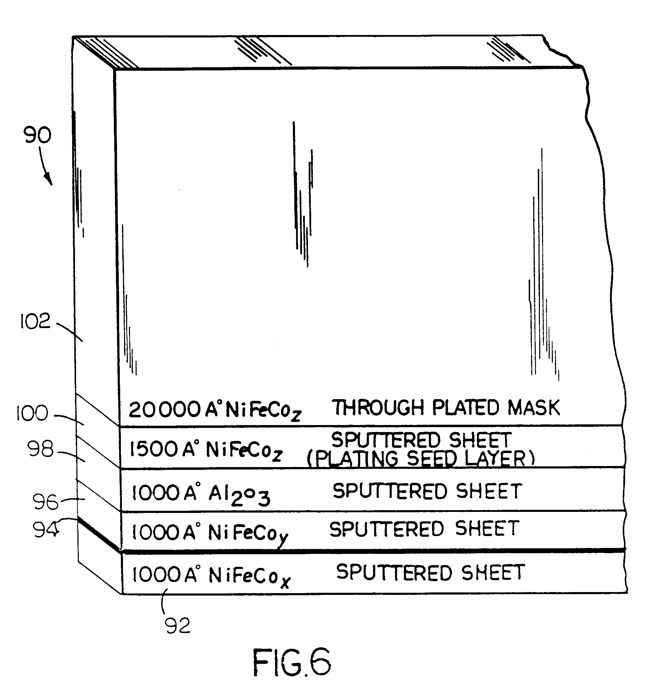

Still another embodiment of the invention is shown in Fig.6. A pole 90 is a thick unlaminated pole on a thin laminated seed layer. A laminated seed layer is used to conduct flux by rotation during the readback while a thick unlaminated layer conducts flux by rotation or wall motion during write. During readback the thick layer can transmit flux to the thin layer by rotation even when its domain structure is unfavourable for carrying the flux to the yoke by itself. The pole 90 of Fig.6 is made in the following way. A first ferromagnetic layer 92 is sheet deposited. A thin Layer 94 of a nonmagnetic material such $Al_2O_3$ is sputtered onto the layer 92. The thin layer 94 has a thickness determined by the inequality set forth in conjunction with Fig.2 above. A second ferromagnetic layer 96 is next deposited. A second nonmagnetic layer 98 which is much thicker than the layer 94 is deposited on the layer 96. A suitable thickness for the layer 98 is approximately 100nm (1000 Angstroms) and will provide decoupling to the overlying layers so that stray fields from them do not adversely affect the laminated layers. A third magnetic layer 100 is plated on the layer 98 to serve as a plating base. Finally, one patterns and through mask plates a thick magnetic layer 102 having a thickness of approximately 2 microns (20000 Angstroms). The plated thick layer 102 serves as a mask to ion mill its pattern into the underlying laminated structure.

The pole structures disclosed herein generate domain structures that conduct flux by rotation. These structures give good high frequency response and avoid Barkhausen noise. As track widths are narrowed in order to record at high track density, it becomes more and more difficult to achieve good domain structures. If nonlaminated, high anisotropy materials are used for high density applications, the permeability of the pole is reduced with a corresponding loss of flux utilisation efficiency. The pole structures of the present invention overcome this limitation. An additional benefit of lamination is the suppression of eddy currents for even better high frequency response when the nonmagnetic layer is also an electrical insulator.

It is recognized that modifications and variations of the pole structures disclosed herein will be apparent to those skilled in the art.

**Claims**

1. A laminated pole (20,40,60,90) for a magnetic head comprising:
   at least two ferromagnetic layers (22,24;42,48;64;92,96) having different uniaxial anisotropy levels; and
   a non-magnetic layer disposed between the ferromagnetic layers to at least partially separate said ferromagnetic layers, characterized by said non-magnetic layer (26,50,62,94) being configured to inhibit exchange coupling between said ferromagnetic layers through said non-magnetic layer and permit magnetic flux to circulate between said ferromagnetic layers.

2. A laminated pole as in claim 1 comprising two ferromagnetic layers, the difference in said levels of uniaxial anisotropy being selected so that a first one of said ferromagnetic layers causes a second one of said ferromagnetic layers to conduct said flux in a direction that is based on a direction of flux conduction by said first ferromagnetic layer and wherein said configuration of said non-magnetic layer is such that it partially separates said ferromagnetic layers and permits magnetic flux to circulate between said ferromagnetic layers in said direction of flux conduction by said first ferromagnetic layer.

3. The pole (60) of claim 1 wherein said non-magnetic layer is configured to separate said ferromagnetic layers in first regions thereof and to permit said ferromagnetic layers to contact each other in second regions thereof, said magnetic flux passing between said ferromagnetic layers in said second regions.

4. The pole (20,40,90) of claim 1 wherein said non-magnetic layer (26,50,94) is configured to completely separate said ferromagnetic layers and has a thickness selected to permit said magnetic flux to circulate.

**5.** The pole of claim 1 wherein the ferromagnetic layers comprise NiFeCo.

**6.** The pole of claim 1 wherein the non-magnetic layer is NiP.

**7.** The pole of claim 1 wherein the non-magnetic layer is $Al_2O_3$.

**8.** The pole of claim 1 wherein the non-magnetic layer is an electrical insulator.

**9.** The pole of claim 2 wherein the non-magnetic layer thickness is approximately 50nm.

**10.** The pole of claim 1, claim 2 or claim 4, for use with a magnetic medium having a track width W, wherein said non-magnetic layer has a thickness G that satisfies the inequality G < $2H_k(W-T)/M_s$, where $H_k$ is the average uniaxial anisotropy field of each of said at least two ferromagnetic layers, $M_s$ is the saturation magnetization of each of said at least two ferromagnetic layers, W is the width of the pole and T is the thickness of each of said at least two ferromagnetic layers.

**11.** The pole of claim 10 further comprising at least one additional magnetic layer (44,46) of thickness 2T between the at least two magnetic layers (42,48) of thickness T, the magnetic layers separated by respective non-magnetic layers whose respective thicknesses, G, each satisfy said inequality, for T representing the thickness of each of said at least two ferromagnetic layers.

**12.** The pole (90) of claim 10 further including an unlaminated pole upon the laminated structure, wherein the unlaminated pole has a thickness at least an order of magnitude greater than T.

**13.** The pole of claim 10 wherein the two magnetic layers are comprised of nickel-iron alloy each containing different amounts of cobalt.

**14.** The pole (90) of any one of claims 1,2,4 or 10 further comprising a second non-magnetic layer (98) of thickness T on top of the laminated structure, a third magnetic layer (100) thereover having a thickness of approximately 1.5 times T, and a thick unlaminated layer (102) thereover having a thickness of more than double the combined thickness of the layered structure over which it lies.

**15.** The pole of claim 14 wherein the thickness T is approximately 100nm, the thickness of the second of said at least two ferromagnetic layers (96) is less than G, the thickness of said third magnetic layer (100) is approximately 150nm and the thickness of said thick unlaminated layer (102) is approximately 2 microns.

**16.** The pole of claim 1, claim 10 or claim 14 wherein the first non-magnetic layer is electrically insulating.

**17.** The pole of any one of claims 1, 2, 4 or 10 further comprising a third ferromagnetic layer separated from said laminated structure by a second non-magnetic layer, said third ferromagnetic layer having a thickness greater than the thickness of either one of the first two of said at least two ferromagnetic layers.

**18.** The pole of claim 17 wherein the thickness of said third ferromagnetic layer is at least an order of magnitude greater than the thickness of one of said first two of said ferromagnetic layers.

**19.** The pole of claim 10 wherein the thickness of the non-magnetic layer is approximately 5nm.

**Patentansprüche**

**1.** Laminierter Pol (20,40,60,90) für einen Magnetkopf, mit:
wenigstens zwei ferromagnetischen Schichten (22,24;42,48;64; 92,96) mit verschiedenen einachsigen Anisotropiepegeln; und
einer nichtmagnetischen Schicht, die zwischen den ferromagnetischen Schichten angeordnet ist, um die ferromagnetischen Schichten wenigstens teilweise zu trennen, dadurch gekennzeichnet, daß die nichtmagnetische Schicht (26,50,62,94) konfiguriert ist, eine Austauschkopplung zwischen den ferromagnetischen Schichten durch die nichtmagnetische Schicht hindurch zu verhindern und es einem Magnetfluß zu gestatten, zwischen den ferromagnetischen Schichten zu zirkulieren.

**2.** Laminierter Pol nach Anspruch 1, mit zwei ferromagnetischen Schichten, wobei der Unterschied der Pegel der einachsigen Anisotropie so gewählt ist, daß eine Erste der ferromagnetischen Schichten eine Zweite der ferromagnetischen Schichten dazu veranlaßt, den Fluß in einer Richtung zu leiten, die auf einer Richtung der Flußleitung mittels der ersten ferromagnetischen Schicht basiert, und worin die Konfiguration der nichtmagnetischen Schicht so ist, daß sie die ferromagnetischen Schichten teilweise trennt und einem Magnetfluß zwischen den ferromagnetischen Schichten in der Richtung der Flußleitung mittels der ersten ferromagnetischen Schicht zu zirkulieren gestattet.

3. Pol (60) nach Anspruch 1, worin die nichtmagnetische Schicht konfiguriert ist, die ferromagnetischen Schichten in ersten Gebieten davon zu trennen und es den ferromagnetischen Schichten zu gestatten, einander in zweiten Gebieten davon zu berühren, wobei der Magnetfluß zwischen den ferromagnetischen Schichten in den zweiten Gebieten hindurchgeht.

4. Pol (20,40,60) nach Anspruch 1, worin die nichtmagnetische Schicht (26,50,94) konfiguriert ist, die ferromagnetischen Schichten vollständig zu trennen, und eine Dicke aufweist, die so gewählt ist, daß dem Magnetfluß zu zirkulieren gestattet wird.

5. Pol nach Anspruch 1, worin die ferromagnetischen Schichten NiFeCo aufweisen.

6. Pol nach Anspruch 1, worin die nichtmagnetische Schicht NiP ist.

7. Pol nach Anspruch 1, worin die nichtmagnetische Schicht $Al_2O_3$ ist.

8. Pol nach Anspruch 1, worin die nichtmagnetische Schicht ein elektrischer Isolator ist.

9. Pol nach Anspruch 2, worin die Dicke der nichtmagnetischen Schicht ungefähr 50 nm ist.

10. Pol nach Anspruch 1, Anspruch 2 oder Anspruch 4, zur Verwendung mit einem magnetischen Medium mit einer Spurbreite W, worin die nichtmagnetische Schicht eine Dicke G hat, die der Ungleichheit $G < 2H_k(W-T)/M_s$ genügt, wobei $H_k$ das mittlere einachsige Anisotropiefeld jeder der wenigstens zwei ferromagnetischen Schichten ist, $M_s$ die Sättigungsmagnetisierung jeder der wenigstens zwei ferromagnetischen Schichten ist, W die Breite des Pols ist und T die Dicke jeder der wenigstens zwei ferromagnetischen Schichten ist.

11. Pol nach Anspruch 10, der ferner wenigstens eine zusätzliche magnetische Schicht (44,46) der Dicke 2T zwischen den wenigstens zwei magnetischen Schichten (42,48) der Dicke T aufweist, wobei die magnetischen Schichten durch jeweilige nichtmagnetische Schichten getrennt sind, deren jeweilige Dicken G jede der Ungleichheit für ein T genügen, das die Dicke jeder der wenigstens zwei ferromagnetischen Schichten repräsentiert.

12. Pol (90) nach Anspruch 10, der ferner einen unlaminierten Pol auf der laminierten Struktur enthält, wobei der unlaminierte Pol eine Dicke hat, die wenigstens eine Größenordnung größer als T ist.

13. Pol nach Anspruch 10, worin die zwei magnetischen Schichten aus Nickel-Eisen-Legierungen bestehen, die je verschiedene Mengen an Kobalt enthalten.

14. Pol (90) nach einem der Ansprüche 1, 2, 4 oder 10, der ferner eine zweite nichtmagnetische Schicht (98) der Dicke T auf der Oberseite der laminierten Struktur, eine dritte magnetische Schicht (100) darüber mit einer Dicke von ungefähr 1,5 mal T und eine dicke unlaminierte Schicht (102) darüber mit einer Dicke von mehr als dem Doppelten der zusammengefaßten Dicke der Schichtstruktur, über der sie liegt, aufweist.

15. Pol nach Anspruch 14, worin die Dicke T ungefähr 100 nm ist, die Dicke der zweiten der wenigstens zwei ferromagnetischen Schichten (96) geringer als G ist, die Dicke der dritten magnetischen Schicht (100) ungefähr 150 nm ist und die Dicke der dicken unlaminierten Schicht (102) ungefähr 2 Mikrometer ist.

16. Pol nach Anspruch 1, Anspruch 10 oder Anspruch 14, worin die erste nichtmagnetische Schicht elektrisch isolierend ist.

17. Pol nach einem der Ansprüche 1, 2, 4 oder 10. der ferner eine dritte ferromagnetische Schicht aufweist, die durch eine zweite nichtmagnetische Schicht von der laminierten Struktur getrennt ist, wobei die dritte ferromagnetische Schicht eine Dicke hat, die größer als die Dicke jeder von den ersten zwei der wenigstens zwei ferromagnetischen Schichten ist.

18. Pol nach Anspruch 17, worin die Dicke der dritten ferromagnetischen Schicht wenigstens eine Größenordnung größer als die Dicke einer der ersten zwei der ferromagnetischen Schichten ist.

19. Pol nach Anspruch 10, worin die Dicke der nichtmagnetischen Schicht ungefähr 5 nm ist.

## Revendications

1. Pôle stratifié (20, 40, 60, 90) pour une tête magnétique, comprenant:

   au moins deux couches ferromagnétiques (22, 24; 42, 48; 64; 92, 96) ayant des niveaux d'anisotropie uniaxiale différents; et

   une couche non magnétique disposée entre les couches ferromagnétiques pour séparer au moins partiellement lesdites couches ferromagnétiques, caractérisé par le fait que ladite couche non magnétique (26, 50, 62, 94) est configurée de façon à inhiber le couplage d'échange entre lesdites couches ferromagnétiques par l'intermédiaire de ladite couche non magnétique et à permettre au flux magnétique de circuler entre lesdites couches ferromagnétiques.

2. Pôle stratifié selon la revendication 1, comprenant deux couches ferromagnétiques, la différence entre lesdits niveaux d'anisotropie uniaxiale étant sélectionnée de manière à ce qu'une première desdites couches ferromagnétiques amène une seconde desdites couches ferromagnétiques à conduire ledit flux dans une direction qui est basée sur une direction de conduction de flux par ladite première couche ferromagnétique et dans lequel ladite configuration de ladite couche non magnétique est telle qu'elle sépare partiellement lesdites couches ferromagnétiques et permet au flux magnétique de circuler entre lesdites couches ferromagnétiques dans ladite direction de conduction de flux par ladite première couche ferromagnétique.

3. Pôle (60) selon la revendication 1, dans lequel ladite couche non magnétique est configurée de façon à séparer lesdites couches ferromagnétiques dans des premières régions de ces dernières et à permettre auxdites couches ferromagnétiques d'être en contact entre elles dans des secondes régions de ces dernières, ledit flux magnétique passant entre lesdites couches ferromagnétiques dans lesdites secondes régions.

4. Pôle (20, 40, 90) selon la revendication 1, dans lequel ladite couche non magnétique (26, 50, 94) est configurée de façon à séparer complètement lesdites couches ferromagnétiques et présente une épaisseur sélectionnée de façon à permettre audit flux magnétique de circuler.

5. Pôle selon la revendication 1, dans lequel les couches ferromagnétiques se composent de NiFeCo.

6. Pôle selon la revendication 1, dans lequel la couche non magnétique est en NiP.

7. Pôle selon la revendication 1, dans lequel la couche non magnétique est en $Al_2O_3$.

8. Pôle selon la revendication 1, dans lequel la couche non magnétique est un isolateur électrique.

9. Pôle selon la revendication 2, dans lequel l'épaisseur de la couche non magnétique est égale à environ 50 nm.

10. Pôle selon la revendication 1, 2 ou 4, destiné à être utilisé avec un support magnétique ayant une largeur de piste W, dans lequel ladite couche non magnétique a une épaisseur G qui satisfait l'inégalité $G < 2H_k(W-T)/M_s$, où $H_k$ est le champ d'anisotropie uniaxiale moyen de chacune desdites couches ferromagnétiques au nombre d'au moins deux, $M_s$ est l'aimantation à saturation de chacune desdites couches ferromagnétiques au nombre d'au moins deux, W est la largeur du pôle et T est l'épaisseur de chacune desdites couches ferromagnétiques au nombre d'au moins deux.

11. Pôle selon la revendication 10, comprenant, en outre, au moins une couche magnétique supplémentaire (44, 46) d'épaisseur 2T entre les couches magnétiques au nombre d'au moins deux (42, 48) d'épaisseur T, les couches magnétiques séparées par des couches non magnétiques respectives dont les épaisseurs respectives, G, satisfont chacune ladite inégalité, pour T représentant l'épaisseur de chacune desdites couches ferromagnétiques au nombre d'au moins deux.

12. Pôle (90) selon la revendication 10, comprenant, en outre, un pôle non stratifié sur la structure stratifiée, dans lequel le pôle non stratifié a une épaisseur supérieure d'au moins un ordre de grandeur à T.

13. Pôle selon la revendication 10, dans lequel les deux couches magnétiques se composent d'un alliage nickel-fer, chaque alliage contenant différentes quantités de cobalt.

14. Pôle (90) selon l'une quelconque des revendications 1, 2, 4 ou 10, comprenant, en outre, une seconde couche non magnétique (98) d'épaisseur T sur la structure stratifiée, une troisième couche magnétique (100) disposée par-dessus et ayant une épaisseur approximativement égale à 1,5 fois T, et une couche épaisse non stratifiée (102) disposée par-dessus et ayant une épaisseur égale à plus de deux fois l'épaisseur combinée de la structure stratifiée sur laquelle elle s'étend.

**15.** Pôle selon la revendication 14, dans lequel l'épaisseur T est égale à environ 100 nm, l'épaisseur de la seconde desdites couches ferromagnétiques au nombre d'au moins deux (96) est inférieure à G, l'épaisseur de ladite troisième couche magnétique (100) est égale à environ 150 nm et l'épaisseur de ladite couche épaisse non stratifiée (102) est égale à environ 2 microns.

**16.** Pôle selon la revendication 1, 10 ou 14, dans lequel la première couche non magnétique est électriquement isolante.

**17.** Pôle selon l'une des revendications 1, 2, 4 ou 10, comprenant, en outre, une troisième couche ferromagnétique séparée de ladite structure stratifiée par une seconde couche non magnétique, ladite troisième couche ferromagnétique ayant une épaisseur supérieure à l'épaisseur de l'une ou l'autre des deux premières desdites couches ferromagnétiques au nombre d'au moins deux.

**18.** Pôle selon la revendication 17, dans lequel l'épaisseur de ladite troisième couche ferromagnétique est supérieure d'au moins un ordre de grandeur à l'épaisseur de l'une desdites deux premières desdites couches ferromagnétiques.

**19.** Pôle selon la revendication 10, dans lequel l'épaisseur de la couche non magnétique est égale à environ 5 nm.

FIG.1a

HORIZONTALLY ORIENTED
NORMAL DOMAINS FLUX
CONDUCTION BY
ROTATION

FIG.1b

ROTATION

FIG.1c

WALL
MOVES

ROTATION

FIG.1d

WALL
MOVES

FIG.2

FIG. 3

FIG.4

FIG.5*a*

FIG.5*b*

FIG.5*c*

90

102

100 — 20000 A° $NiFeCo_z$    THROUGH PLATED MASK

98 — 1500 A° $NiFeCo_z$    SPUTTERED SHEET (PLATING SEED LAYER)

96 — 1000 A° $Al_2O_3$    SPUTTERED SHEET

94 — 1000 A° $NiFeCo_y$    SPUTTERED SHEET

1000 A° $NiFeCo_x$    SPUTTERED SHEET

92

FIG.6